# NEUE EUROPÄISCHE PATENTSCHRIFT

(11) **EP 3 545 766 B2**
(45) Veröffentlichungstag und Bekanntmachung des Hinweises auf die Entscheidung über den Einspruch: **23.09.2026**
(45) Hinweis auf die Patenterteilung: 13.12.2023
(21) Anmeldenummer: 18165176.1
(22) Anmeldetag: 29.03.2018
(51) Int. Cl.: A21C 15/00, A21D 13/24, A21D 13/47

(54) **VERFAHREN ZUR HERSTELLUNG EINES KEKSES**
METHOD FOR MANUFACTURING A BISCUIT
PROCÉDÉ DE PRODUCTION DESTINÉE À LA PRODUCTION D'UN PRODUIT DE LA BISCUITERIE

(43) Veröffentlichungstag der Anmeldung: 02.10.2019
(73) Patentinhaber: Griesson - de Beukelaer GmbH & Co. KG, 56751 Polch (DE)
(72) Erfinder: Hajji, Dr. Fuad, 56218 Mülheim-Kärlich (DE); Obermeier, Thomas, 56330 Kobern Gondorf (DE); Dyks, Jutta, 56727 Mayen (DE)
(74) Vertreter: Bernsmann, Falk

(56) Entgegenhaltungen:
- EP-A1- 2 127 528
- GB-A- 586 375
- US-A- 5 698 252
- US-A1- 2002 071 893
- ANONYMOS: "Spitzbuben {Jam Sandwich Cookies} -Earthy Feast", EARTHYFEAST, 6 December 2014 (2014-12-06), pages 1 - 11, XP055682491, Retrieved from the Internet <URL:http://www.earthyfeast.com/recipe/spitzbuben-jam-sandwich-cookies/> [retrieved on 20200402]
- ANONYMOUS: "Rentier Kekse (Rezept)", KASCHULA.COM, 5 December 2017 (2017-12-05), pages 1 - 8, XP055486492, Retrieved from the Internet <URL:http://kaschula.com/rentier-kekse/> [retrieved on 20180621]
- ANONYMOUS: "Walnussbusserl mit Karamell", KEKSE & COOKIES, GENUSSREZEPTE FÜR JEDEN TAG, CIRCON, 1 January 2012 (2012-01-01), pages 17, XP093228522
- ANONYMOUS: "Donauschwäbischer Hochzeitzopf", BACKEN VOM FEINSTEN, PAR EXCELLENCE: BACKTRADITION AUS ÖSTERREICH, BLV BUCHVERLAGE GMBH & CO. KG, vol. 11, 1 January 2017 (2017-01-01), pages 261, XP093228525

## Beschreibung

Die Erfindung betrifft Verfahren zur Herstellung eines Kekses mit zumindest einem essbaren Stückgut auf zumindest einem Teilbereich einer rauen Oberseite eines Keksrohlings. Die Erfindung betrifft außerdem eine Produktionsanlage zur Herstellung eines Kekses mit einem erfindungsgemäßen Verfahren.

Aus dem Stand der Technik sind verschiedene Verfahren zur Fixierung von Stückgut auf Backwaren bekannt.

So ist beispielsweise aus der Patentschrift US3343965A eine Kuchenglasur bekannt, die vor dem Backen auf einen Teig aufgebracht wird und Obst- oder Nussstücke enthalten kann. Nachteilig ist dabei, dass die Obst- oder Nussstücke dem Backvorgang ausgesetzt werden, wodurch sich ihr Aussehen und/oder ihr Geschmack negativ verändern kann. Ferner kann kein Stückgut verwendet werden, dass durch den Backvorgang zerstört wird, beispielsweise weil es schmilzt, insbesondere kann kein Schokolade oder Karamell enthaltendes Stückgut verwendet werden. Außerdem sind die Obst- oder Nussstücke gemäß US3343965 von der Glasur umschlossen, wodurch sich ein unvorteilhaftes "künstliches" Aussehen der Obst- oder Nussstücke ergeben kann.

Die Patentschrift US4913919 offenbart eine Beschichtung aus einer wässrigen Suspension, die Maltodextrin und Stärkepartikel enthält, für Nahrungsmittel. Die Beschichtung kann dazu eingesetzt werden, essbares Stückgut auf einem Nahrungsmittel, beispielsweise einem Keks, zu fixieren. Das Aussehen und die Gas- oder Feuchtigkeitsdurchlässigkeit der Beschichtung können durch Anpassung des Verhältnisses von Maltodextrin zu Stärkepartikeln variiert werden. Die Suspension kann vor oder nach einem Backen des Nahrungsmittels aufgebracht werden. Wird die Suspension nach dem Backen aufgebracht, wird sie zum Trocknen und Erstarren erhitzt, typischerweise für 2 bis 10 Minuten auf 177 °C bis 204 °C Diese Hitzebehandlung kann auch hier das Stückgut beschädigen oder zerstören.

Aus der Patentanmeldung DE3923596A1 ist ein Verfahren bekannt, bei dem, gegebenenfalls mit einem Haftmittel versehene, Backrohlinge vor dem Backen mit einem, beispielsweise körnigen, Belagmittel in Kontakt gebracht werden. Auch hier ergibt sich der Nachteil, dass das Belagmittel erhitzt wird.

Die Patentschrift US5532010 offenbart beschichtete Hundekekse und ein Verfahren für deren Herstellung. Die Beschichtung enthält Fleischstücke und wird auf die gebackenen Hundekekse, beispielsweise durch Eintauchen, aufgebracht und dann bei 52 °C bis 149 °C getrocknet. Auch hier ergibt sich der Nachteil, dass das Stückgut von der Beschichtung eingeschlossen ist und erhitzt wird.

Die Patentanmeldung EP1483969A1 beschreibt einen Cracker mit einem kleinstückigen Belag auf einer Bindeschicht und ein Herstellungsverfahren dafür. Nach dem Aufbringen der Bindeschicht und des Belags auf den gegarten Cracker wird dieser einer Hitzebehandlung, insbesondere bei 100 °C bis 120 °C für 20 bis 60 Minuten, zur Trocknung unterzogen. Diese Hitzebehandlung kann den Belag beschädigen oder zerstören.

Aus der Patentanmeldung DE102007021583A1 ist ein Verfahren zur Herstellung einer Backware bekannt, bei dem vor dem Backen eines Teiglings in eine Aufnahmemulde des Teiglings eine Bindemasse und ein Zusatzobjekt eingefüllt werden. Nachteilig an diesem Verfahren ist, dass eine Aufnahmemulde bereitgestellt werden muss, um die Bindemasse und das Zusatzobjekt zu positionieren, wodurch das Verfahren nur auf eine begrenzte Auswahl von Backwaren angewandt werden kann.

Die Patentanmeldung US20100028497A1 offenbart ein Verfahren zur Herstellung eines extrudierten Nahrungsmittels, wobei auf einem expandierten Teigband ein essbares Klebemittel und Oberflächeneinschlüsse (z.B. Getreidekörner, Obststücke oder Käse) aufgebracht werden, bevor das Teigband in Stücke geschnitten, getrocknet und (z.B. bei 200 °C bis 250 °C geröstet wird. Diese Hitzebehandlung kann die Oberflächeneinschlüsse beschädigen oder zerstören.

Die Patentanmeldung DE102011108562A1 beschreibt ein Verfahren zur Herstellung einer Süßware, wobei auf eine Dauerbackware ein Bindemittel und darauf eine Schokolade oder Fettglasur umfassende Masse aufgebracht wird. Die Schokolade kann Cerealien enthalten. Auch hier ergibt sich der Nachteil, dass die Cerealien von der Masse eingeschlossen sind und somit für einen Konsumenten nicht sichtbar.

Die Druckschrift GB 586375 A beschreibt ein Verfahren zur Herstellung eines Kekses, bei dem eine von einem essbaren, thermoplastischen Material ummantelte Füllung nach dem Backen des Kekses, und bevor dieser unter eine Erstarrungstemperatur des thermoplastischen Materials abgekühlt ist, aufgebracht wird, damit das Material an dem Keks fest anhaftet. Es wird kein Verfahren zur Fixierung eines Stückguts auf einem Keks beschrieben.

Aufgabe der Erfindung ist es daher, ein vielseitiges und kostengünstiges Verfahren zu schaffen, mit dem unterschiedliche essbare Stückgüter auf einem Keksrohling fixiert werden können, ohne dass die sensorische Wahrnehmung, insbesondere das Aussehen, der Geschmack, die Textur oder der Geruch, des Stückguts verfälscht werden. Außerdem ist es Aufgabe der Erfindung, eine effiziente Produktionsanlage zur Herstellung eines Kekses mit einem erfindungsgemäßen Verfahren zu schaffen.

Der Gegenstand der vorliegenden Erfindung stellt ein Verfahren bereit, das diese Aufgabe erfindungsgemäß entsprechend den Merkmalen des Anspruches 1 löst.

Vorteilhafte Ausgestaltungen ergeben sich aus den abhängigen Ansprüchen.

Ein erfindungsgemäßes Verfahren dient zur Herstellung eines Kekses mit zumindest einem essbaren Stückgut auf zumindest einem Teilbereich einer rauen Oberseite des Kekses und umfasst zumindest eine Backphase und eine sich an die Backphase anschließende Abkühlphase eines Keksrohlings. Während der Abkühlphase sinkt die Temperatur des Keksrohlings von einer Backtemperatur auf eine Umgebungstemperatur des Keksrohlings.

Unter dem Begriff "Keks" wird ein Gebäck, insbesondere ein Kleingebäck, in Form einer Dauerbackware mit langer Haltbarkeit, insbesondere von mürber Konsistenz und aus einem Hartkeksteig oder einem Mürbekeksteig, verstanden. Insbesondere aufgeschäumte oder expandierte Backwaren, wie beispielsweise Trockenflachbrot, fallen nicht unter die erfindungsgemäße Verwendung des Begriffs "Keks". Der Keks weist eine raue Oberseite auf, wobei insbesondere eine Rauheit der Oberfläche mit einer räumlichen Ausdehnung des Stückguts vergleichbar sein kann, beispielsweise in einem Bereich von einem Zehntel bis zu einem Zehnfachen, insbesondere von einer Hälfte bis zu einem Doppelten der Ausdehnung liegen kann. Ein Beispiel für einen

Keks ist ein Cookie. Durch eine raue Oberseite entsteht vorteilhafterweise eine vergrößerte Oberfläche des Kekses, die insbesondere zu einer verbesserten haptischen und/oder geschmacklichen Wahrnehmung des Kekses durch einen Konsumenten, insbesondere beim Verzehr des Kekses, führen kann. Das Stückgut liegt in Vertiefungen der rauen Oberfläche zumindest teilweise eingebettet, und ist dadurch vor Umwelteinflüssen, beispielsweise eines mechanische Abriebs mit einer Verbundfolie einer Verpackung, insbesondere nach der Produktion, geschützt.

Ein "Stückgut" im Sinne der Erfindung ist ein Feststoff mit einer räumlichen Ausdehnung, die deutlich geringer ist als eine räumliche Ausdehnung des Kekses, beispielsweise weniger als ein Fünftel, insbesondere weniger als ein Zehntel, davon. Gleichzeitig ist die räumliche Ausdehnung des Stückguts so groß, dass ein Konsument des Kekses ein einzelnes Stückgut visuell und/oder haptisch, insbesondere bei einem Verzehr des Kekses, erkennen kann. Die räumliche Ausdehnung liegt beispielsweise in einem Bereich von 1 mm bis 25 mm, insbesondere in einem Bereich von 5 mm bis 10 mm. Dadurch ist das Stückgut vorteilhafterweise in einer kosteneffizienten Industrieproduktion unproblematisch rieselfähig. Durch das Stückgut kann vorteilhafterweise eine sensorische Wahrnehmung, insbesondere ein Aussehen, eine Textur, ein Geruch, ein Geschmack und/oder ein Verzehrgefühl, des Kekses variiert werden. Das Stückgut kann insbesondere als Einzelzutat, beispielsweise als chemischer Reinstoff, oder als Mischzutat, beispielsweise als Gemisch mehrerer Reinstoffe, vorliegen. Die Verwendung einer Einzelzutat hat den Vorteil, dass sich Eigenschaften des Kekses, wie beispielsweise Geschmack oder Mundgefühl beim Verzehr, besonders genau einstellen lassen.

Das erfindungsgemäße Verfahren zur Herstellung eines Kekses mit zumindest einem essbaren Stückgut auf zumindest einem Teilbereich einer rauen Oberseite eines Keksrohlings, umfasst zumindest eine Backphase und eine sich an die Backphase anschließende Abkühlphase des Keksrohlings, wobei eine Temperatur des Keksrohlings während der Abkühlphase von einer Backtemperatur auf eine Umgebungstemperatur des Keksrohlings sinkt, wobei das Verfahren zumindest folgende, in der angegebenen Reihenfolge nacheinander ausgeführte, Schritte umfasst:
a. Backen des Keksrohlings während der Backphase;
b. Auftragen eines Bindemittels während einer Auftragsphase zumindest auf den Teilbereich;
c. Aufbringen des Stückgutes während einer Aufbringphase zumindest auf den Teilbereich, sodass das Stückgut in Vertiefungen der rauen Oberseite zumindest teilweise eingebettet liegt und dadurch vor Umwelteinflüssen geschützt ist, und
d. Aushärten des Bindemittels während einer Aushärtphase,
wobei das Auftragen des Bindemittels nur vor dem Aufbringen des Stückguts erfolgt, und die Auftragphase, die Aufbringphase und die Aushärtphase von der Abkühlphase umfasst sind, und eine Temperatur des Keksrohlings
e. während der Auftragphase unterhalb einer maximalen Auftragtemperatur und oberhalb einer minimalen Auftragtemperatur und
f. während der Aufbringphase unterhalb einer maximalen Aufbringtemperatur und oberhalb einer minimalen Aufbringtemperatur liegt,
und das Bindemittel transparent ist.

Durch die Auswahl unterschiedlicher Stückgüter und/oder einer unterschiedlichen Aufbringung der Stückgüter kann vorteilhafterweise aus gleichartigen Keksrohlingen eine große Vielfalt unterschiedlicher, insbesondere für einen Kunden individualisierter, Kekse hergestellt werden. Der Teig-Rohling, Teigling oder Keksrohling kann vorgefertigt, insbesondere mit einer Standard-Rezeptur hergestellt, sein. Aus der Verwendung eines einheitlichen Rohlings ergibt sich der Vorteil, dass ein zeit- und kostenintensives Umrüsten einer Herstellungsanlage minimiert wird oder sogar vollständig entfällt. Dadurch steigert sich die Produktivität und Effizienz der Produktion, gefolgt von einer Verbesserung der Wettbewerbsfähigkeit. Der Keksrohling kann im Rahmen des erfindungsgemäßen Verfahrens hergestellt werden oder, insbesondere von einem externen Lieferanten, vorgefertigt in das Verfahren eingehen.

Von dem Begriff "Backen" wird im Sinne der Erfindung sowohl ein Ausbacken eines Teig-Rohlings oder Teiglings als auch ein Nachbacken, Aufbacken oder Überbacken eines vorgebackenen Keksrohlings umfasst. Wesentlich für ein "Backen" im Sinne der Erfindung ist, dass zumindest die Oberseite des Keksrohlings vor dem Aufbringen des zumindest einen Stückguts dabei erwärmt wird, bevorzugt zumindest bis zu einer Temperatur, bei der das Bindemittel an dem Keks und/oder dem Stückgut haftfähig, vorteilhafterweise angeschmolzen, ist. Andererseits sollte die Oberseite nicht so heiß sein, dass das Bindemittel zu dünnflüssig wird, um bis zum Aufbringen des Stückguts auf dem Keksrohling zu verbleiben, oder bei Kontakt mit der Oberseite optisch oder chemisch dauerhaft verändert wird, beispielsweise einen unangenehmen Geschmack oder ein unansehnliches Aussehen entwickelt. Dafür haben Versuch besonders geeignete Temperaturbereiche von 28 °C bis 120 °C, besonders vorteilhaft von 30 °C bis 80 °C, ergeben.

Bei dem Bindemittel kann es sich beispielsweise um eine fließfähige Suspension oder eine wässrige Lösung, insbesondere von einem Zucker, beispielsweise Glucosesirup, beispielsweise in Wasser handeln. Das Auftragen des Bindemittels und/oder Beschichten einer Oberfläche des Stückguts mit dem Bindemittel kann vorteilhafterweise sicherstellen, dass das Stückgut, insbesondere auf einer rauen Oberfläche, zuverlässig an dem Keksrohling anhaftet, insbesondere wenn das Stückgut erst nach dem Backen aufgebracht wird. Dadurch ergibt sich eine einfache Handhabung des Kekses, insbesondere kann der Keks einfach transportiert und verpackt werden, ohne dass das Stückgut sich von dem Keksrohling löst. Das Beschichten, das örtlich und/oder zeitlich unabhängig von den weiteren Verfahrensschritten erfolgen kann, hat den besonderen Vorteil, dass kein Bindemittel auf nicht mit Stückgut versehenen Bereichen des Keksrohlings verbleit, sodass sich ein besonders natürliches Aussehen des Kekses ergibt. Insbesondere kann das beschichtete Stückgut unabhängig von dem Keksrohling produziert werden.

Durch das Aushärten wird in kurzer Zeit eine stabile Fixierung des Stückguts an dem Keksrohling erreicht. Das Aushärten umfasst ein, insbesondere vollständiges, Trocknen und/oder Erstarren des Bindemittels.

Die Auftragphase, die Aufbringphase und die Aushärtphase sind von der Abkühlphase umfasst, und eine Temperatur des Keksrohlings liegt
e. während der Auftragphase unterhalb einer maximalen Auftragtemperatur und oberhalb einer minimalen Auftragtemperatur und
f. während der Aufbringphase unterhalb einer maximalen Aufbringtemperatur und oberhalb einer minimalen Aufbringtemperatur.

Dadurch, dass die Auftragphase, die Aufbringphase und die Aushärtphase von der Abkühlphase umfasst sind; das Auftragen, das Aufbringen und das Aushärten also während eines ohnehin erforderlichen Abkühlens des Keksrohlings nach dem Backen erfolgen; ergibt sich ein besonders zeiteffizientes Verfahren. Vorteilhafterweise wird die in dem Keksrohling nach dem Backen verbleibende Restwärme dafür genutzt, dass die Temperatur des Keksrohlings während der Auftragphase oberhalb einer minimalen Auftragtemperatur und/oder während der Aufbringphase oberhalb einer minimalen Aufbringtemperatur liegt. Somit ist kein erneutes Erhitzen des Keksrohlings, das zusätzliche Zeit, Energie und Heizvorrichtungen benötigen würde, notwendig. Weiterhin wird durch den Verzicht auf ein erneutes Erhitzen einer Bildung von gesundheitsschädlichen Substanzen in dem Keksrohling und/oder dem Stückgut, wie beispielsweise Acrylamid, vorgebeugt. Außerdem kann eine Aufbringtemperatur vorteilhafterweise so gewählt werden, dass die Beschichtung eines beschichteten Stückguts nur in einem Kontaktbereich zu dem Keksrohling anschmilzt und auf einer dem Keksrohling abgewandten und für den Konsumenten sichtbaren Seite nicht thermisch degradiert, beispielsweise farblich verändert, wird. Folglich erfolgt in einer besonders vorteilhaften Ausgestaltung des Verfahrens kein Erhitzen des Keksrohlings nach der Abkühlphase.

Ein besonderer Vorteil des erfindungsgemäßen Verfahrens liegt darin, dass auf einfache und effiziente Weise mehrere Halbfertigwaren, wie beispielsweise ein Keksrohling und ein, insbesondere mit Bindemittel beschichtetes, Stückgut, zu einem Produkt verbunden werden können. Durch eine Kombination unterschiedlicher Halbfertigwaren kann mit einfachen Mitteln, insbesondere ohne Veränderungen an einer Produktionsanlage, in kurzer Zeit eine große Vielfalt unterschiedlicher Produkte hergestellt werden.

Die maximale Auftragtemperatur ist beispielsweise eine Bindemitteldegradierungstemperatur (beispielsweise ab 208 °C für Maltodextrin), oberhalb der das Bindemittel thermisch degradiert wird. Die minimale Auftragtemperatur ist beispielsweise eine Erstarrungstemperatur, unterhalb der das Bindemittel erstarrt. Liegt die Temperatur des Keksrohlings während der Auftragphase zwischen der maximalen und der minimalen Auftragtemperatur, wird dadurch sichergestellt, dass das Bindemittel einerseits nicht thermisch degradiert wird und andererseits flüssig und/oder für Stückgut haftfähig vorliegt, sodass es den Keksrohling und/oder das Stückgut benetzen und als Haftvermittler zwischen Keksrohling und Stückgut dienen kann.

Die maximale Aufbringtemperatur ist beispielsweise eine Stückgutdegradierungstemperatur, oberhalb der das Stückgut thermisch degradiert, insbesondere in seinem Aussehen und/oder Geschmack verändert, wird. Insbesondere kann die maximale Aufbringtemperatur eine Schmelztemperatur oder Denaturierungstemperatur des Stückguts sein. Für Karamellstückgut liegt eine maximale Aufbringtemperatur beispielsweise bei einer Schmelztemperatur von Karamell im Bereich von 48 °C bis 65 °C. Die minimale Aufbringtemperatur ist beispielsweise eine Erstarrungstemperatur, unterhalb der das Bindemittel erstarrt. Liegt die Temperatur des Keksrohlings während der Aufbringphase zwischen der maximalen und der minimalen Aufbringtemperatur, wird dadurch sichergestellt, dass einerseits das Stückgut nicht thermisch degradiert wird, und andererseits das Bindemittel in einem geeigneten Zustand ist, das Stückgut auf dem Keksrohling zu fixieren.

Ein erfindungsgemäßer Gedanke ist, eine Erstarrungszeit des Bindemittels auf dem Keksrohling bis in die Aufbringphase von Stückgut zu verlängern, indem der Keksrohling in der Abkühlphase als Wärmereservoir für das aufgetragene Bindemittel dient. Je länger die Erstarrungszeit derart verlängert werden kann, desto einfacher und produktionstechnisch sicherer ist der Schritt des Aufbringens von Stückgut. Insbesondere kann die Temperatur in der Aufbringphase so ausgelegt werden, dass über eine zur Beschickung des Teilbereiches der Keksrohlingsoberfläche mit Stückgut produktionstechnisch hinreichend langen Zeitspanne ein Temperaturbereich derart einstellbar ist, dass das Bindemittel haftfähig ist und das Stückgut nicht beschädigt wird. Beispielsweise kann bei einem als Schokolade ausgestalteten Stückgut verhindert werden, dass sich ein Fettglanz oder eine milchige Oberfläche ergibt. Insbesondere werden Veränderungen des Stückguts in Farbe, Form, Textur oder Geschmack, die durch ein zu starkes Erhitzen des Stückguts auftreten könnten, vermieden. Dadurch kann insbesondere auch hitzeempfindliches Stückgut, das beispielsweise bei Hitze schmilzt, wie insbesondere Schokolade, seine Farbe verändert, wie insbesondere Schokolinsen (z.B. Smarties), Karamell oder Gelee-Fruchtstücke, und/oder seinen Geschmack verändert, wie insbesondere Popcorn, gepuffte Quinoasamen oder Marshmallows, verwendet werden, woraus sich eine hohe Vielseitigkeit des Verfahrens ergibt.

In einer besonders vorteilhaften Ausgestaltung des Verfahrens erfolgt nach dem Aufbringen des Stückguts auf einen, insbesondere vorgefertigten, Keksrohling kein Erhitzen des Stückguts über eine Phasenübergangstemperatur, beispielsweise eine Schmelztemperatur oder eine Denaturierungstemperatur, des Stückguts, insbesondere kein Erhitzen über 50 °C, insbesondere 30 °C. Besonders vorteilhafterweise erfolgt nach dem Aufbringen kein Erhitzen des Stückguts.

Das Verfahren kann ein Einstellen zumindest einer physikochemischen und insbesondere für die Eignung des Bindemittels als Haftvermittler zwischen Keksrohling und Stückgut relevanten Eigenschaft des Bindemittels, insbesondere eines pH-Werts, einer Viskosität, einer Temperatur und/oder eines Brix-Wertes, und bevorzugt auch weiterer Eigenschaften wie eines Aromas, umfassen. Das Einstellen kann beispielsweise sicherstellen, dass eine Oberfläche des Keksrohlings und/oder des Stückguts gleichmäßig benetzt wird, sodass, insbesondere ohne Erhitzen des Keksrohlings und/oder Stückguts, eine gute Fixierung des Stückgutes auf dem Keksrohling erreicht wird. Weiterhin können eine Haftfähigkeit des Bindemittels an und/oder eine Auftragfähigkeit des Bindemittels auf den Keksrohling und/oder das Stückgut, ein Aussehen des Bindemittels und/oder eine Möglichkeit, das Bindemittel selektiv von dem Keksrohling und/oder dem Stückgut zu entfernen, vorteilhaft eingestellt werden. Eine Möglichkeit, das Bindemittel selektiv zu entfernen, kann beispielsweise ein Einziehen in den Keksrohling und/oder das Stückgut und/oder ein Abblasen und/oder Absaugen des Bindemittels sein. Ein Einziehen des Bindemittels ist insbesondere dann vorteilhaft, wenn das Bindemittel ein Feuchthaltemittel, beispielsweise Sorbit oder Glycerin, für den Keks enthält, da somit über das Bindemittel ein Feuchtigkeitsgehalt des Kekses, insbesondere ohne weitere Verfahrensschritte, eingestellt werden kann.

Das Einstellen kann beispielsweise durch ein Anpassen einer Temperatur des Bindemittels und/oder durch Zugeben zumindest eines Lösungsmittels und/oder zumindest einer Zutat, bevorzugt eines Feuchthaltemittels wie Sorbit oder Glycerin, zu dem Bindemittel, bevorzugt unter Rühren des Bindemittels, erfolgen.

Das Bindemittel kann zum Zeitpunkt des Auftragens einen pH-Wert zwischen 4 und 9, insbesondere zwischen 5 und 8, beispielsweise 7, aufweisen. Ein solcher, in etwa neutraler, pH-Wert verhindert insbesondere, dass sich die sensorische Wahrnehmung des Stückguts durch Kontakt mit dem Bindemittel verändert. Beispielsweise könnte ein stark saurer pH-Wert zu einer Entfärbung des Stückguts führen.

Das Bindemittel kann zum Zeitpunkt des Auftragens einen Brix-Wert von über 50 °Brix, insbesondere zwischen 50 °Brix und 90 °Brix aufweisen. Im Fall einer wässrigen Lösung oder Suspension, insbesondere von einem Zucker, entspricht ein hoher Brix-Wert einem geringen Wassergehalt im Verhältnis zu darin gelösten oder suspendierten Stoffen. Ein geringer Wassergehalt im Bindemittel führt zu einem geringen Wassergehalt im Keks, sodass dieser länger haltbar und insbesondere gegen Schimmelbildung geschützt ist. Versuche haben andererseits ergeben, dass ein Brix-Wert von über 90 °Brix eine für das Auftragen zu hohe Viskosität des Bindemittels bewirkt. Daher sind der pH-Wert und der Brix-Wert des Bindemittels für die Qualitätserhaltung des Stückguts und des Kekses besonders relevant.

Erfindungsgemäß erfolgt das Auftragen des Bindemittels nur vor dem Aufbringen des Stückguts. Erfolgt das Auftragen des Bindemittels vor dem Aufbringen des Stückguts, ergeben sich daraus die Vorteile, dass für eine besonders gute Fixierung des Stückguts auf dem Keksrohling eine Kontaktfläche zwischen dem Stückgut und dem Keksrohling durch das Bindemittel benetzt werden kann. Erfolgt das Auftragen nur vor dem Aufbringen, kann dadurch eine Bedeckung des Stückguts, die zu einer unvorteilhaften Veränderung von dessen Aussehen führen könnte, verhindert werden.

Das Auftragen des Bindemittels auf den, insbesondere vorgefertigten, Keksrohling erfolgt nach dem Backen, bevor der Keksrohling von dem Backen auf eine Umgebungstemperatur erkaltet ist. Dadurch, dass das Auftragen nach dem Backen erfolgt, kann das Aufbringen des Stückguts kurz darauf erfolgen, sodass das Bindemittel beispielsweise während des Auftragens noch nicht erstarrt ist, sodass eine gute Fixierung des Stückguts an dem Bindemittel erfolgt. Erfolgt das Auftragen, bevor der Keksrohling erkaltet ist, beispielsweise bei einer Temperatur des Keksrohlings von 30 °C bis 70 °C, kann dadurch vorteilhafterweise ein Erstarren des Bindemittels verzögert werden.

Das Auftragen des Bindemittels kann durch ein Aufstreichen, bevorzugt mit einem profilierten Streichwerkzeug erfolgen. Das Aufstreichen kann insbesondere ein Bindemittel mit derart hoher Viskosität, dass es bis zum Aufbringen des Stückguts nicht aus dem Teilbereich verfließt, wie es beispielsweise zur Fixierung von relativ großem Stückgut vorteilhaft ist, weil dieses teilweise darin einsinken kann, gleichmäßig aufbringen.

Das Auftragen des Bindemittels kann durch ein Aufsprühen, bevorzugt unter einem Winkel zwischen 10° und 80°, besonders bevorzugt zwischen 30° und 60°, zu einer Auflagefläche des Keksrohlings, aus mehreren Richtungen, durch eine Maske und/oder mit zumindest einer ausrichtbaren Düse, erfolgen. Das Aufsprühen, insbesondere in den genannten Ausgestaltungen, erlaubt vorteilhafterweise eine gleichmäßige und schnelle Verteilung des Bindemittels, insbesondere auf einer rauen Oberfläche. In einer besonders vorteilhaften Ausgestaltung umfasst das Aufsprühen ein Ultraschall-Zerstäuben des Bindemittels, wodurch ein besonders feiner Sprühnebel und somit eine besonders gleichmäßige und fein dosierte Benetzung des Keksrohlings mit dem Bindemittel erreicht werden kann. Ferner kann durch ein Ultraschall-Zerstäuben sichergestellt werden, dass selbst bei einem niedrigen Durchfluss und/oder im Intervallbetrieb eine Auftragvorrichtung nicht verstopft.

Das Beschichten des Stückguts mit dem Bindemittel kann beispielsweise durch ein Eintauchen des Stückguts in das Bindemittel und/oder durch ein Aufsprühen, insbesondere mit Ultraschall-Zerstäuben, des Bindemittels auf das Stückgut erfolgen.

Das Verfahren kann ein Entfernen von Bindemittel, das sich nicht an einer Kontaktfläche zwischen dem Stückgut und der Oberseite des Keksrohlings befindet, nach dem Aufbringen umfassen. Das Entfernen kann beispielsweise durch ein Abblasen oder Absaugen, des Bindemittels und/oder ein Einziehen des Bindemittels in den Keks erfolgen. Das Entfernen verleiht dem mit Stückgut beladenen Keks vorteilhafterweise ein besonders natürliches, qualitativ hochwertiges Aussehen.

Das Verfahren kann ein Lösen von unzureichend gebundenem Stückgut von dem Keksrohling umfassen, beispielsweise durch ein Abschütteln, Abblasen und/oder Absaugen des unzureichend gebundenen Stückguts. Das Lösen verhindert vorteilhafterweise, dass sich unzureichend gebundenes Stückgut später, beispielsweise wenn der Keks verpackt, transportiert oder verzehrt wird, löst. Dadurch erzeugt der Keks bei einem Konsumenten einen besonders hochwertigen Eindruck.

Das Verfahren kann ein Rückführen des gelösten Stückguts und insbesondere ein Aufbringen des gelösten Stückguts auf einen weiteren Keksrohling umfassen; insbesondere durch eine Rückführeinrichtung, die beispielsweise ein Transportband umfassen kann. Das Rückführen erlaubt vorteilhafterweise einen besonders effizienten Einsatz des Stückguts.

Durch das Auftragen des Bindemittels kann erfindungsgemäß eine sensorische Wahrnehmung, insbesondere ein Geschmack, bevorzugt eine Süße und/oder ein Aroma, und/oder eine Konsistenz, bevorzugt ein Feuchtigkeitsgehalt, des Kekses eingestellt werden. Beispielsweise kann ein in dem Bindemittel enthaltenes Lösungsmittel, insbesondere Wasser, und/oder ein Feuchthaltemittel, insbesondere Sorbitol oder Glycerin, in den Keksrohling eindringen, um eine weiche Konsistenz des Kekses zu erzeugen. Zum Beispiel kann so ein Wassergehalt des Kekses eingestellt werden, insbesondere auf einen Wert von zwischen 3 bis 5 % für einen Cookie oder zwischen 5 bis 9 % für einen Soft-Cookie. Ferner kann beispielsweise ein in dem Bindemittel enthaltener Geschmacksstoff, insbesondere ein Sü-ßungsmittel, bei einem Konsumenten einen stärkeren Geschmack erzeugen, als wenn die gleiche Menge Geschmacksstoff in einem Keksteig, aus dem der Keksrohling hergestellt ist, enthalten wäre, da sich der im Bindemittel enthaltene Geschmacksstoff an der Oberfläche des Kekses befindet und somit beim Verzehr direkt zugänglich ist. Auf diese Weise wird der Geschmackstoff besonders effizient eingesetzt. Außerdem kann das Bindemittel auch Geschmacksstoffe enthalten, die im Keksteig nicht eingesetzt werden können, beispielsweise wegen Wechselwirkungen mit anderen Inhaltsstoffen des Keksteiges oder weil eine Temperaturbeständigkeit der Geschmacksstoffe für das Backen des Keksrohlings nicht ausreichend ist. Durch das Einstellen des Geschmacks und/oder der Konsistenz können durch das Verfahren besonders vielfältige Kekse hergestellt werden.

Das Auftragen des Bindemittels und/oder das Aufbringen des Stückguts kann in Form eines Musters, bevorzugt eines Bildes, eines Logos und/oder einer Anzahl von Schriftzeichen, erfolgen. Dadurch können mit dem Verfahren vielfältig gestaltete Kekse hergestellt werden. Das Auftragen und/oder Aufbringen kann beispielsweise durch eine Maske und/oder mit zumindest einer ausrichtbaren Düse erfolgen.

Das Muster kann zweidimensional, d.h. aus genau einer, gegebenenfalls durchbrochenen, Lage Stückgut bestehend, oder dreidimensional, d.h. aus mehreren, gegebenenfalls durchbrochenen, Lagen Stückgut bestehend, sein. Insbesondere im Fall eines dreidimensionalen Musters können mehrere verschiedene Stückgüter, beispielsweise je eines pro Lage, verwendet werden. Werden mehrere Lagen Stückgut aufgebracht, kann vor dem Aufbringen einer weiteren Lage ein Nacherwärmen einer Oberfläche der jeweils vorherigen Lage und/oder ein weiteres Auftragen von Bindemittel erfolgen. Durch das Nacherwärmen, beispielsweise durch zumindest einen Infrarotstrahler, und/oder weitere Auftragen kann vorteilhafterweise eine stabile Anhaftung des Stückguts der weiteren Lage an dem Stückgut der vorherigen Lage gewährleistet werden.

Das Auftragen des Bindemittels und/oder das Aufbringen des Stückguts kann einen Randbereich des Keksrohlings aussparen. Dadurch kann ein Konsument den Keks an dem Randbereich besonders einfach und ohne Stückgut von dem Keks abzulösen greifen.

Das Aufbringen des Stückguts erfolgt so, dass es in Vertiefungen der rauen Oberseite des Keksrohlings zumindest teilweise eingebettet liegt und dadurch vor Umwelteinflüssen geschützt ist. Das Aufbringen des Stückguts kann auf eine sich über den Teilbereich hinaus erstreckende Fläche erfolgen. Durch dieses "ungezielte" Aufbringen kann das Aufbringen mit besonders einfachen Mitteln und besonders schnell erfolgen. Außerhalb des mit Bindemittel versehenen Teilbereichs auf dem Keksrohling auftreffendes Stückgut kann gegebenenfalls danach wieder entfernt werden.

Das Aufbringen des Stückguts kann beispielsweise ein Aufstreuen des Stückguts auf den Keksrohling umfassen. Ein Aufstreuen hat die Vorteile, dass es technisch einfach umsetzbar und für eine Vielzahl unterschiedlicher Stückgüter geeignet ist.

Das Aufbringen des Stückguts kann ein Temperieren des Stückguts umfassen, insbesondere bei der Verwendung eines selbstklebenden, essbaren Stückguts. Insbesondere kann das Stückgut auf eine Temperatur temperiert werden, bei der es einerseits rieselfähig ist, also insbesondere nicht verklebt, und andererseits über das auf dem Stückgut und/oder dem Keksrohling vorhandene Bindemittel an dem Keksrohling haftet. Die in dem Keksrohling noch vom Backen enthaltene Restwärme kann das Stückgut bei Kontakt mit dem Keksrohling über die zuvor eingestellte Temperatur des Stückguts erwärmen und so eine gute Haftung ermöglichen. Dadurch kann das Stückgut erfindungsgemäß auf eine niedrigere Temperatur temperiert werden, beispielsweise auf etwa 30 °C statt über 60 °C, als in gattungsgemäßen Verfahren, sodass das Stückgut, insbesondere auch wenn es mit Bindemittel beschichtet ist, bis zum Kontakt mit dem Keksrohling rieselfähig bleibt. Ferner werden durch eine niedrigere Temperierung Farbe, Konsistenz und Geschmack des Stückguts erhalten.

Das Aushärten des Bindemittels kann ein kontrolliertes Abkühlen des Kekses, umfassen. Das Abkühlen kann beispielsweise durch Kontakt des Kekses mit einem temperierten Luftstrom und/oder einer temperierten Oberfläche erfolgen. Vorteilhafterweise erfolgt das Abkühlen so langsam, dass keine Risse und/oder Abplatzungen aufgrund unterschiedlicher thermischer Ausdehnungskoeffizienten von Keksrohling, Bindemittel und/oder Stückgut entstehen. Ein mit einem erfindungsgemäßen Verfahren herstellbarer Keks umfasst zumindest ein essbares Stückgut, das durch ein Bindemittel auf zumindest einem Teilbereich einer rauen Oberseite eines Keksrohlings fixiert ist.

Die Komponenten des Kekses können insbesondere so ausgestaltet sein wie zum erfindungsgemäßen Verfahren beschrieben, woraus sich die dort beschriebenen Vorteile ergeben.

In einer vorteilhaften Ausgestaltung ist das Bindemittel für einen Konsumenten des Kekses nicht visuell wahrnehmbar. "Nicht visuell wahrnehmbar" im Sinne der Erfindung bedeutet, dass ein Konsument das Bindemittel nicht wahrnimmt, wenn er den Keks mit situationsadäquater Aufmerksamkeit konsumiert. "Situationsadäquat" bedeutet im Sinne der Erfindung, dass der Konsument den Keks zwar vor dem Verzehr betrachtet, insbesondere auch aus einer kurzen Entfernung von beispielsweise 30-60 cm und unter wechselnden Blickwinkeln, aber dabei nur kurz prüft, was er verzehrt, und den Keks insbesondere nicht länger eingehend untersucht. Diese Prüfung dauert in der Regel weniger als eine Sekunde und erfolgt zumindest teilweise unbewusst. Insbesondere betrachtet der Konsument den Keks mit dem bloßen Auge und ohne optische Hilfsmittel.

Daraus, dass das Bindemittel nicht visuell wahrnehmbar ist, ergibt sich der Vorteil, dass das Bindemittel in der visuellen Wahrnehmung gegenüber dem Keksrohling und dem Stückgut zurücktritt und nicht als eigene Komponente wahrgenommen wird. Das führt zu einem scheinbar bindemittelfreien und somit besonders natürlichen und hochwertigen Erscheinungsbild des Kekses. Insbesondere wird der Keks durch das Bindemittel nicht unansehnlich und dadurch in seinem Wert gemindert.

Das Bindemittel ist transparent und kann eine matte Beschichtung bilden. In diesen Ausgestaltungen ist das Bindemittel vorteilhafterweise nicht visuell wahrnehmbar. Eine matte Beschichtung bietet den besonderen Vorteil, dass sie auch bei Bewegung des Kekses keine Reflexionen erzeugt, die für einen Konsumenten visuell wahrnehmbar wären.

Das Bindemittel kann ein Feuchthaltemittel, bevorzugt Sorbitol oder Glycerin, umfassen. Das Bindemittel kann insbesondere nur an einer Kontaktfläche zwischen dem Stückgut und der Oberseite des Keksrohlings angeordnet sein, beispielsweise da es selektiv nur dort aufgebracht und/oder außerhalb der Kontaktfläche entfernt wurde.

Das Bindemittel kann außerhalb einer Kontaktfläche zwischen dem Stückgut und der Oberseite des Keksrohlings in den Keksrohling eingezogen sein.

Das Bindemittel kann ein Hydrokolloid, bevorzugt ein Polysaccharid, besonders bevorzugt hochamylosehaltige Stärke und/oder Maltodextrin umfassen. Hochamylosehaltige Stärke bietet den besonderen Vorteil, dass sie in kurzer Zeit, beispielsweise in wenigen Sekunden, einen festen Film bildet, sodass besonders schnell eine sichere Fixierung des Stückguts auf dem Keksrohling erreicht werden kann.

Das Bindemittel kann beispielsweise einen Zucker, bevorzugt Glucosesirup, umfassen. Ein Zucker bietet die Vorteile, dass eine stabile Bindung des Stückguts an dem Keksrohling ermöglicht und zur Verwendung in Lebensmitteln unbedenklich ist.

Der Keks ist durch ein Aufbringen des Stückguts und ein Auftragen des Bindemittels nach einem Backen des Kekses mit einem erfindungsgemäßen Verfahren herstellbar, insbesondere hergestellt, woraus sich die zum erfindungsgemäßen Verfahren beschriebenen Vorteile und Ausgestaltungsmöglichkeiten ergeben.

Das Stückgut kann insbesondere back- und/oder farblabil sein und beispielsweise Popcorn, gepuffte Quinoasamen, Marshmallows, Gelee-Fruchtstücke, Karamellstücke, Schokoladenstücke, Schokoladenstreusel und/oder Schokoladenlinsen umfassen. Zusätzlich oder alternativ zu back- und/oder farblabilem Stückgut, das durch ein Backen in seinem Aussehen und/oder Geschmack verändert wird, kann der Keks auch anderes Stückgut wie beispielsweise Nussstücke und/oder Getreidekörner umfassen.

Der Keks kann einen bindemittel- und/oder stückgutfreien Randbereich aufweisen, und/oder das Bindemittel und/oder das Stückgut kann ein Muster, bevorzugt ein Bild, ein Logo und/oder eine Anzahl von Schriftzeichen, bilden. Daraus ergeben sich die weiter oben zu den entsprechenden Verfahrensmerkmalen beschriebenen Vorteile.

Eine Produktionsanlage ist zur Herstellung eines Kekses aus einem Keksrohling mit einem erfindungsgemäßen Verfahren ausgelegt. Die Produktionsanlage (nicht erfindungsgemäß) umfasst zumindest:
a. eine Bindemittelvorbereitungsvorrichtung zum Einstellen zumindest einer physikalischen Eigenschaft, ausgewählt aus einer Viskosität, einem Brix-Wert und einer Temperatur eines Bindemittels;
b. eine Auftragvorrichtung zum Auftragen des Bindemittels auf zumindest einen Teilbereich einer rauen Oberseite des Keksrohlings und
c. eine Aufbringvorrichtung zum Aufbringen zumindest eines Stückguts als Einzel- und/oder Mischzutat zumindest auf den Teilbereich.

Die Bindemittelvorbereitungsvorrichtung umfasst beispielsweise einen Behälter zur Aufnahme des Bindemittels, eine Mischvorrichtung, beispielsweise ein Rührwerk, zur Durchmischung des Bindemittels, eine Temperierungsvorrichtung, umfassend beispielsweise einen Heizwiderstand, zur Temperierung des Bindemittels und/oder eine Anzahl von Dosierungsvorrichtungen zur Dosierung von Komponenten des Bindemittels in den Behälter.

Die Auftragvorrichtung kann beispielsweise eine Anzahl von, insbesondere ausrichtbaren, Düsen zum Aufsprühen und/oder eine Anzahl von, insbesondere profilierten, Pinseln, zum Aufstreichen des Bindemittels auf den Keksrohling umfassen. Die Auftragvorrichtung kann vorteilhafterweise einen Ultraschall-Zerstäuber zur Erzeugung eines besonders feinen Bindemittel-Sprühnebels umfassen.

Die Aufbringvorrichtung kann beispielsweise eine Streuvorrichtung zum Streuen des Stückguts auf den Keksrohling und/oder eine Maske zum Aufbringen des Stückguts auf einen definierten Teilbereich des Keksrohlings umfassen.

Die Produktionsanlage umfasst eine Steuervorrichtung zur automatischen Steuerung der Auftragvorrichtung und der Aufbringvorrichtung. Vorteilhafterweise umfasst die Steuervorrichtung eine Sensoreinheit zur Detektion einer Position und/oder Art des Keksrohlings. Die Sensoreinheit kann beispielsweise ein Kamerasystem und einen Bilderkennungsalgorithmus zur Erkennung des Keksrohlings umfassen. Vorteilhafterweise kann die Steuervorrichtung die Art und Position eines Keksrohlings detektieren und daraufhin die Auftragvorrichtung und/oder die Aufbringvorrichtung so steuern, dass das Bindemittel und/oder das Stückgut vorwiegend auf den Keksrohling und nicht in dessen Umgebung appliziert wird. Dadurch werden Bindemittel und/oder Stückgut besonders effizient eingesetzt.

Die Produktionsanlage umfasst zumindest ein Transportmittel für den Keksrohling und vorzugsweise für den Keks, beispielsweise ein Transportband, zur Zuführung des Keksrohlings zu verschiedenen Teilen der Produktionsanlage und/oder einer Prüfanlage und/oder Verpackungsanlage für den Keks umfassen. Das Transportmittel umfasst zumindest einen Warmhalteabschnitt zum Warmhalten des Keksrohlings nach dem Backen. Der Warmhalteabschnitt kann beispielsweise ein Wärmedämmmittel, beispielsweise einen Tunnel aus einem wärmedämmenden Material, zur thermischen Isolierung des Keksrohlings umfassen. Der Warmhalteabschnitt kann den Keksrohling vorteilhafterweise, insbesondere während eines Transports zu einer Auftragvorrichtung und/oder Aufbringvorrichtung, warmhalten, sodass die Temperatur des Keksrohlings bei Erreichen der Auftragvorrichtung und/oder Aufbringvorrichtung noch oberhalb einer minimalen Auftragtemperatur bzw. Aufbringtemperatur liegt. Dadurch kann die Restwärme des Keksrohlings effizient genutzt werden, um eine gute Haftung des Stückguts an dem Keksrohling zu erzielen. In einer besonders einfach umzusetzenden Ausgestaltung kann der Warmhalteabschnitt von einem aus der gattungsgemäßen Keksproduktion bekannten Vorkühltunnel, dessen Kühlung deaktiviert ist, gebildet sein.

Die Anlage kann zumindest eine -Ausschleusevorrichtung zum Ausschleusen von fehlerhaften Keksen (z.B. mit zu geringer Masse) beinhalten. Durch die Ausschleusevorrichtung können fehlerhafte Kekse frühzeitig aus dem Produktionsprozess entfernt werden, sodass die Qualität der im Produktionsprozess verbleibenden Kekse gesteigert wird. Insbesondere muss dafür nicht die Produktion unterbrochen oder eine gesamte, einen fehlerhaften Keks enthaltende, Charge vernichtet werden. Insbesondere in einem erfindungsgemäßen Verfahren, das mehrere Schritte nach dem Backen des Keksrohlings umfasst, besteht eine erhöhte Gefahr, dass beispielsweise bei dem Auftragen des Bindemittels oder dem Aufbringen des Stückguts, Fehler, beispielsweise eine unvollständige Bedeckung des Keksrohlings mit Stückgut, passieren. Daher sind eine Ausschleusevorrichtung und ein entsprechendes Ausschleusen für ein erfindungsgemäßes Verfahren und eine Produktionsanlage von besonderer Bedeutung.

Die Produktionsanlage kann zumindest eine Entfernungsvorrichtung zum Entfernen von überschüssigem Bindemittel und/oder Lösen von unzureichend gebundenem Stückgut von dem Keksrohling umfassen. Die Entfernungsvorrichtung kann beispielsweise ein Gebläse zum Abblasen von Bindemittel und/oder Stückgut von dem Keksrohling, eine Heizvorrichtung zum Verdampfen oder Sublimieren von Bindemittel und/oder eine Rüttelvorrichtung zum Abschütteln von Stückgut von dem Keksrohling umfassen.

Die Produktionsanlage kann zumindest eine Rückführungsvorrichtung zum Rückführen von von einem Keksrohling gelöstem Stückgut zur Aufbringvorrichtung umfassen, wobei die Rückführungsvorrichtung beispielsweise ein Transportband umfasst.

Die Produktionsanlage umfasst zumindest eine Aushärtvorrichtung zum Aushärten des Bindemittels. Die Aushärtvorrichtung kann beispielsweise einen Kühltunnel zum kontrollierten Abkühlen des Kekses umfassen.

Die Produktionsanlage umfasst zumindest einen Backraum zum Backen, insbesondere zum Ausbacken, Nachbacken und/oder Überbacken eines Keks-Teiglings oder Keksrohlings zu dem Keksrohling.

Weitere Vorteile, Ziele und Eigenschaften vorliegender Erfindung werden anhand nachfolgender Beschreibung und anliegender Zeichnungen erläutert, in welchen beispielhaft das erfindungsgemäße Verfahren dargestellt ist.

Merkmale, welche in den Figuren wenigstens im Wesentlichen hinsichtlich ihrer Funktion übereinstimmen, können hierbei mit gleichen Bezugsziffern gekennzeichnet sein, wobei diese Merkmale nicht in allen Figuren beziffert und erläutert sein müssen.

### Es zeigen:

- Fig. 1: eine schematische Darstellung eines erfindungsgemäßen Verfahrens;
- Fig. 2: eine schematische Darstellung eines weiteren erfindungsgemäßen Verfahrens;
- Fig. 3: eine schematische Darstellung eines mit einem erfindungsgemäßen Verfahren herstellbaren Kekses;
- Fig. 4: eine schematische Darstellung einer Produktionsanlage;

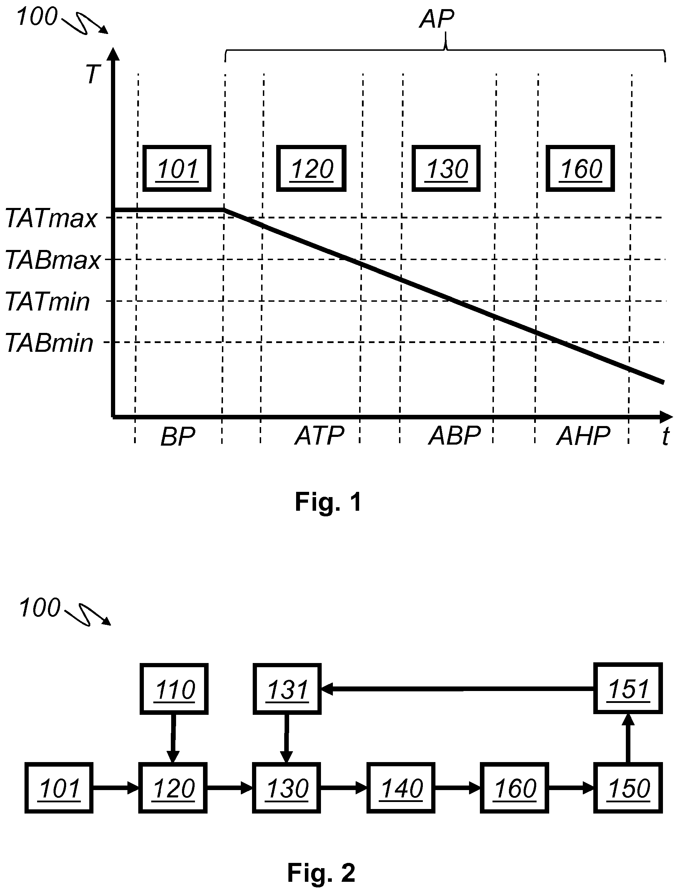

**Figur 1** zeigt eine schematische Darstellung eines erfindungsgemäßen Verfahrens 100 zur Herstellung eines Kekses 200 mit zumindest einem essbaren Stückgut 210, beispielsweise Karamellstücken, auf zumindest einem Teilbereich 201 einer rauen Oberseite eines Keksrohlings 199, beispielsweise eines Cookies, wobei das Verfahren 100 beispielsweise folgende Schritte umfasst:
a. Backen 101 des Keksrohlings 199 während einer Backphase BP;
b. Auftragen 120, beispielsweise Aufsprühen, eines Bindemittels 220, beispielsweise Glucosesirup, während einer Auftragphase ATP zumindest auf den Teilbereich 201;
c. Aufbringen 130, beispielsweise Aufstreuen, des Stückgutes 210 während einer Aufbringphase ABP zumindest auf den Teilbereich 201 und
d. Aushärten 160 des Bindemittels (220) während einer Aushärtphase AHP.

Die genannten Schritte werden erfindungsgemäß in der genannten Reihenfolge hintereinander ausgeführt.

Figur 1 zeigt einen beispielhaften Verlauf einer Temperatur T des Keksrohlings 199 abhängig von der Zeit t während des Verfahrens 100. An die Backphase BP schließt sich eine Abkühlphase AP an, während der die Temperatur T, beispielsweise linear oder exponentiell, fällt. In einem erfindungsgemäßen Verfahren sind die Auftragphase ATP, die Aufbringphase ABP und die Aushärtphase AHP von der Abkühlphase AP umfasst.

Während der Auftragphase ATP liegt die Temperatur T unterhalb einer maximalen Auftragtemperatur TATmax, beispielsweise einer Degradierungstemperatur des Bindemittels 220, und oberhalb einer minimalen Auftragtemperatur TATmin, beispielsweise einer Erstarrungstemperatur des Bindemittels 220.

Während der Aufbringphase ABP liegt die Temperatur T unterhalb einer maximalen Aufbringtemperatur TABmax, beispielsweise einer Degradierungstemperatur des Stückguts 210, und oberhalb einer minimalen Aufbringtemperatur TABmin, beispielsweise einer Erstarrungstemperatur des Bindemittels 220.

Die so definierten Temperaturbereiche für die Auftragphase und die Aufbringphase können wie im dargestellten Beispiel überlappend, voneinander beabstandet oder zueinander identisch sein.

**Figur 2** zeigt eine schematische Darstellung eines weiteren erfindungsgemäßen Verfahrens 100, das zusätzlich zu den in Figur 1 dargestellten Schritten weitere Schritte umfassen kann. Das Verfahren 100 kann ein Einstellen 110 zumindest einer physikochemischen Eigenschaft des Bindemittels 220, beispielsweise einer Viskosität, umfassen, wobei das Einstellen 110 beispielsweise durch ein Anpassen einer Temperatur des Bindemittels 220, insbesondere unter Rühren des Bindemittels 220, erfolgt. Das Einstellen 110 erfolgt vorteilhafterweise, vor dem Auftragen 120 des Bindemittels auf den Keksrohling 199.

Das Verfahren 100 kann ein Entfernen 140 von Bindemittel 220, das sich nicht an einer Kontaktfläche zwischen dem Stückgut 210 und der Oberseite des Keksrohlings 199 befindet, nach dem Aufbringen 130, beispielsweise durch ein Einziehen des Bindemittels 220 in den Keksrohling 199, umfassen.

Das Verfahren 100 kann ein Lösen 150 von unzureichend gebundenem Stückgut 210 von dem Keksrohling 199, beispielsweise durch ein Abschütteln des unzureichend gebundenen Stückguts 210, umfassen. Insbesondere kann das Verfahren 100 ein Rückführen 151, beispielsweise mit einem Transportband, des gelösten Stückguts 210 für ein Aufbringen 130 auf einen weiteren Keksrohling 199 umfassen.

Das Aufbringen 130 kann ein Temperieren 131 des Stückguts 210, beispielsweise auf eine Temperatur, bei der das Stückgut 210 einerseits nicht verklumpt und andererseits über das Bindemittel 220 an dem Keksrohling haftfähig ist, umfassen.

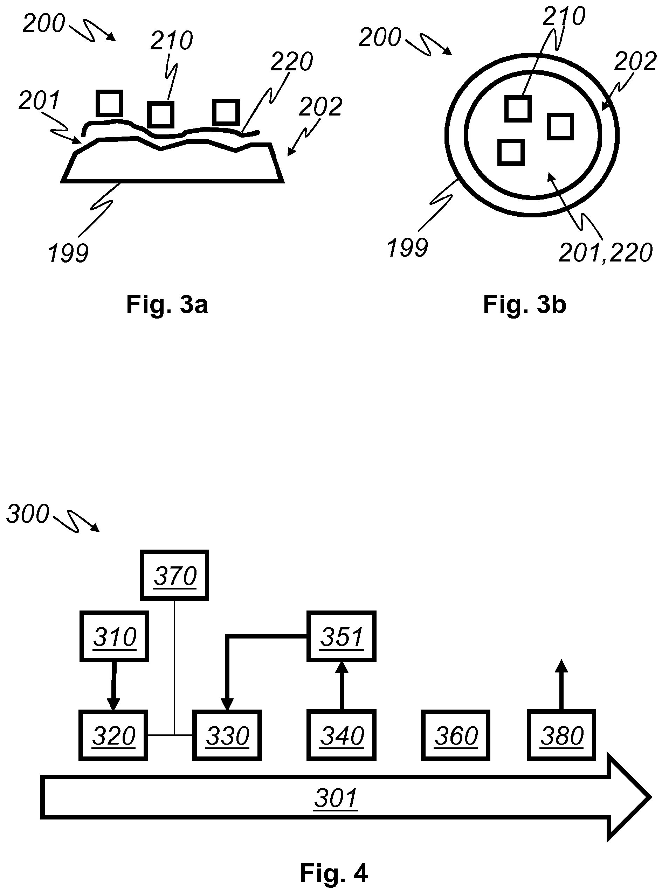

**Figur 3** zeigt eine schematische Darstellung eines mit einem erfindungsgemäßen Verfahren herstellbaren Kekses 200 in einer Seitansicht (Fig. 3a) und einer Aufsicht (Fig. 3b). Der Keks 200 umfasst zumindest ein essbares Stückgut 210 (nur exemplarisch beschriftet), beispielsweise Karamellstücke. Das Stückgut 210 ist durch ein Bindemittel 220, beispielsweise Glucose, auf zumindest einem Teilbereich 201 einer rauen Oberseite eines Keksrohlings 199, beispielsweise eines Cookies, fixiert. Dabei ist das Bindemittel 220 vorteilhafterweise für einen Konsumenten des Kekses 200 nicht visuell wahrnehmbar, beispielsweise weil es eine transparente und matte Beschichtung auf dem Keksrohling 199 bildet.

Der Keks 200 kann einen stückgutfreien und insbesondere auch bindemittelfreien Randbereich 202 aufweisen.

**Figur 4** zeigt eine schematische Darstellung einer Produktionsanlage 300 zur Herstellung eines Kekses 200 aus einem Keksrohling 199 mit einem erfindungsgemäßen Verfahren. Die Produktionsanlage umfasst eine Bindemittelvorbereitungsvorrichtung, beispielsweise mit einem Behälter zur Aufnahme des Bindemittels, einer Mischvorrichtung zur Durchmischung des Bindemittels und einer Temperierungsvorrichtung zur Temperierung des Bindemittels 220, zum Einstellen 110 zumindest einer physikochemischen Eigenschaft eines Bindemittels 220.

Die Produktionsanlage 300 umfasst eine Auftragvorrichtung 320, beispielsweise mit einer Anzahl von Düsen zum Aufsprühen des Bindemittels auf den Keksrohling, zum Auftragen 120 des Bindemittels 220 auf zumindest einen Teilbereich 201 einer rauen Oberseite des Keksrohlings.

Die Produktionsanlage 300 umfasst eine Aufbringvorrichtung 330, beispielsweise mit einer Streuvorrichtung zum Streuen des Stückguts 210 auf den Keksrohling 199, zum Aufbringen 130 zumindest eines Stückguts 210 zumindest auf den Teilbereich 201.

Die Produktionsanlage 300 umfasst eine Steuervorrichtung 370, beispielsweise mit einer Sensoreinheit zur Detektion einer Position und/oder Art des Keksrohlings 199, zur automatischen Steuerung der Auftragvorrichtung 320 und der Aufbringvorrichtung 330.

Die Produktionsanlage 300 umfasst ein Transportmittel 301, beispielsweise ein Transportband, für den Keks 200 und bevorzugt für den Keksrohling 199.

Die Produktionsanlage 300 kann eine Entfernungsvorrichtung 340, beispielsweise mit einem Gebläse zum Abblasen von Bindemittel 220 und/oder Stückgut 210 von dem Keksrohling 199, zum Entfernen 140 von überschüssigem Bindemittel 220 und/oder Lösen 150 von unzureichend gebundenem Stückgut 210 von dem Keksrohling 199 umfassen.

Die Produktionsanlage 300 kann eine Rückführungsvorrichtung 351, beispielsweise mit einem Transportband, zum Rückführen 151 von von einem Keksrohling 199 gelöstem Stückgut 210 zur Aufbringvorrichtung 330 und/oder eine Ausschleusevorrichtung 380 zum Ausschleusen von fehlerhaften Keksen 200 umfassen.

Die Produktionsanlage 300 umfasst eine Aushärtvorrichtung 360, beispielsweise einen Kühltunnel, zum Aushärten des Bindemittels 220.

### BEZUGSZEICHENLISTE

- 100: Verfahren
- 101: Backen
- 110: Einstellen
- 120: Auftragen
- 130: Aufbringen
- 131: Temperieren
- 140: Entfernen
- 150: Lösen
- 151: Rückführen
- 160: Aushärten
- 199: Keksrohling
- 200: Keks
- 201: Teilbereich
- 202: Randbereich
- 210: Stückgut
- 220: Bindemittel
- 300: Produktionsanlage
- 301: Transportmittel
- 310: Bindemittelvorbereitungsvorrichtung
- 320: Auftragvorrichtung
- 330: Aufbringvorrichtung
- 340: Entfernungsvorrichtung
- 360: Aushärtvorrichtung
- 370: Steuervorrichtung
- 380: Ausschleusevorrichtung
- ABP: Aufbringphase
- AHP: Aushärtphase
- AP: Abkühlphase
- ATP: Auftragphase
- BP: Backphase
- TABmax: maximale Aufbringtemperatur
- TABmin: minimale Aufbringtemperatur
- TATmax: maximale Auftragtemperatur
- TATmin: minimale Auftragtemperatur
- T: Temperatur
- t: Zeit

## Patentansprüche

1. Verfahren (100) zur Herstellung eines Kekses (200) mit zumindest einem essbaren Stückgut (210) auf zumindest einem Teilbereich (201) einer rauen Oberseite eines Keksrohlings (199) umfassend zumindest eine Backphase (BP) und eine sich an die Backphase (BP) anschließende Abkühlphase (AP) des Keksrohlings (199), wobei eine Temperatur (T) des Keksrohlings (199) während der Abkühlphase (AP) von einer Backtemperatur auf eine Umgebungstemperatur des Keksrohlings (199) sinkt, wobei das Verfahren (100) zumindest folgende Schritte umfasst:
a. Backen (101) des Keksrohlings (199) während der Backphase (BP);
b. Auftragen (120) eines Bindemittels (220) während einer Auftragphase (ATP) zumindest auf den Teilbereich (201);
c. Aufbringen (130) des Stückgutes (210) während einer Aufbringphase (ABP) zumindest auf den Teilbereich (201), sodass das Stückgut (210) in Vertiefungen der rauen Oberseite zumindest teilweise eingebettet liegt und dadurch vor Umwelteinflüssen geschützt ist, und
d. Aushärten (160) des Bindemittels (220) während einer Aushärtphase (AHP),
**dadurch gekennzeichnet, dass**
das Auftragen (120) des Bindemittels (220) nur vor dem Aufbringen (130) des Stückguts (210) erfolgt, und
die Auftragphase (ATP), die Aufbringphase (ABP) und die Aushärtphase (AHP) von der Abkühlphase (AP) umfasst sind, und eine Temperatur (T) des Keksrohlings (199)
e. während der Auftragphase (ATP) unterhalb einer maximalen Auftragtemperatur (TATmax) und oberhalb einer minimalen Auftragtemperatur (TATmin) und
f. während der Aufbringphase (ABP) unterhalb einer maximalen Aufbringtemperatur (TABmax) und oberhalb einer minimalen Aufbringtemperatur (TABmin) liegt, und
das Bindemittel (220) transparent ist.

2. Verfahren (100) gemäß Anspruch 1,
**dadurch gekennzeichnet, dass**
ein Einstellen (110) zumindest einer physikochemischen Eigenschaft des Bindemittels (220), umfassend eine Viskosität, einen pH-Wert, einen Brix-Wert oder eine Temperatur, eines Bindemittels (220), wobei das Einstellen (110) durch ein Anpassen einer Temperatur des Bindemittels (220) und/oder durch Zugeben zumindest eines Lösungsmittels, und/oder einer Zutat zu dem Bindemittel (220) erfolgt.

3. Verfahren (100) gemäß einem der Ansprüche 1 bis 2,
**dadurch gekennzeichnet, dass**
das Auftragen (120) des Bindemittels
a. bei einem pH-Wert des Bindemittels zwischen 4 und 9 und/oder einem Brix-Wert des Bindemittels von über 50 °Brix erfolgt;

4. Verfahren (100) gemäß einem der Ansprüche 1 bis 3,
**dadurch gekennzeichnet, dass**
das Auftragen (120) des Bindemittels
a. durch ein Aufstreichen mit einem profilierten Streichwerkzeug erfolgt; und/oder
b. durch ein Aufsprühen unter einem Winkel zwischen 10° und 80° zu einer Auflagefläche des Keksrohlings (199), aus mehreren Richtungen, durch eine Maske und/oder mit zumindest einer ausrichtbaren Düse und/oder einer Ultraschalldüse, erfolgt.

5. Verfahren (100) gemäß einem der Ansprüche 1 bis 4,
**gekennzeichnet durch**
ein Entfernen (140) von Bindemittel (220), das sich nicht an einer Kontaktfläche zwischen dem Stückgut (210) und der Oberseite des Keksrohlings (199) befindet, nach dem Aufbringen (130) durch ein Abblasen, Absaugen und/oder ein Einziehen des Bindemittels (220) in den Keksrohling (199).

6. Verfahren (100) gemäß einem der Ansprüche 1 bis 5,
**gekennzeichnet durch**
ein Lösen (150) von unzureichend gebundenem Stückgut (210) von dem Keksrohling (199) durch ein Abschütteln, Abblasen und/oder Absaugen des unzureichend gebundenen Stückguts (210), und ein Rückführen (151) des gelösten Stückguts (210) für ein Aufbringen (130) auf einen weiteren Keksrohling (199).

7. Verfahren (100) gemäß einem der Ansprüche 1 bis 6,
**dadurch gekennzeichnet, dass**
durch das Auftragen (120) des Bindemittels (220) eine sensorische Wahrnehmung, umfassend einen Geschmack und/oder eine Konsistenz des Kekses (200) eingestellt wird.

8. Verfahren (100) gemäß einem der Ansprüche 1 bis 7,
**dadurch gekennzeichnet, dass**
a. das Auftragen (120) und/oder Aufbringen (130) einen Randbereich (202) des Keksrohlings (199) ausspart; und/oder
b. das Aufbringen (130) auf eine sich über den Teilbereich (201) hinaus erstreckende Fläche erfolgt.

9. Verfahren (100) gemäß einem der Ansprüche 1 bis 8,
**dadurch gekennzeichnet, dass**
das Aushärten (160) des Bindemittels (220) ein kontrolliertes Abkühlen des Kekses (200) umfasst.

## Claims

1. A method (100) for preparing a biscuit (200) comprising at least one edible piece good (210) on at least a portion (201) of a rough upper surface of a biscuit preform (199), said method comprising at least one baking phase (BP) and one cooling phase (AP) of the biscuit preform (199) following the baking phase (BP), wherein a temperature (T) of the biscuit preform (199) drops from a baking temperature to an ambient temperature of the biscuit preform (199) during the cooling phase (AP), wherein the method (100) comprises at least the following steps:
a. baking (101) the biscuit preform (199) during the baking phase (BP),
b. deposition (120) of a binding agent (220) at least on the portion (201) during a deposition phase (ATP),
c. application (130) of the piece good (210) at least to the portion (201) during an application phase (ABP) so that the piece good (210) is at least partially embedded in recesses in the rough upper surface and is therefore protected from environmental factors, and
d. curing (160) the binding agent (220) during a curing phase (AHP), **characterized in that**
the deposition (120) of the binding agent takes place only prior to the application (130) of the piece good (210), and
the deposition phase (ATP), the application phase (ABP) and the curing phase (AHP) are comprised by the cooling phase (AP), and
a temperature (T) of the biscuit preform (199)
e. is below a maximum deposition temperature (TATmax) and above a minimum deposition temperature (TATmin) during the deposition phase (ATP), and
f. is below a maximum application temperature (TABmax) and above a minimum application temperature (TABmin) during the application phase (ABP), and
the binding agent (220) is transparent.

2. The method (100) according to claim 1,
**characterized in that**
an adjustment (110) of at least one physicochemical property of the binding agent (220), comprising a viscosity, a pH value, a Brix value or a temperature of the binding agent (220) takes place, wherein the adjustment (110) takes place by means of adapting a temperature of the binding agent (220) and/or by adding at least one solvent, and/or an ingredient to the binding agent (220).

3. The method (100) according to claim 1 or 2,
**characterized in that**
the deposition (120) of the binding agent takes place at a pH value of the binding agent of between 4 and 9 and/or a Brix value of the binding agent of over 50°Bx.

4. The method (100) according to any of the claims 1 to 3,
**characterized in that**
the deposition (120) of the binding agent
a. takes place by means of spreading using a profiled spreading tool; and/or
b. by means of spraying at an angle of between 10° and 80° to a supporting surface of the biscuit preform (199), from a plurality of directions, by means of a mask and/or using at least one directable nozzle and/or an ultrasound nozzle.

5. The method (100) according to any of claims 1 to 4,
**characterized by**
removing (140) of binding agent (220) that is not located on a contact surface between the piece good (210) and the surface of the biscuit preform (199), following application (130) by means of blowing-off or suctioning out the binding agent and/or drawing of the binding agent (220) into the biscuit preform (199).

6. The method (100) according to any of claims 1 to 5,
**characterized by**
detaching (150) inadequately bonded piece good (210) from the biscuit preform (199) by shaking off, blowing off and/or suctioning out the inadequately bonded piece good (210), and returning (151) the detached piece good (210) for application (130) to a further biscuit preform (199).

7. The method (100) according to any of claims 1 to 6,
**characterized in that**
by the deposition (120) of the binding agent (220), a sensory perception, comprising a taste and/or a consistency of the biscuit (200) is adjusted.

8. The method (100) according to any of claims 1 to 7,
**characterized in that**
a. the deposition (120) and/or application (130) leaves free an edge region (202) of the biscuit preform (199), and/or
b. the application (130) takes place on to a surface that extends beyond the portion (201).

9. The method (100) according to any of claims 1 to 8,
**characterized in that**
the curing (160) of the binding agent (220) comprises controlled cooling of the biscuit (200).

## Revendications

1. Procédé (100) de production d'un biscuit (200) comprenant au moins une pièce (210) comestible sur au moins une zone partielle (201) d'une face supérieure rugueuse d'une ébauche de biscuit (199), le procédé (100) comprenant au moins une phase de cuisson (BP) suivie d'une phase de refroidissement (AP) de l'ébauche de biscuit (199), une température de l'ébauche de biscuit (199) descendant pendant la phase de refroidissement (AP) d'une température de cuisson à une température ambiante de l'ébauche de biscuit (199), le procédé (100) comprenant au moins les étapes suivantes :
a. cuisson (101) de l'ébauche de biscuit (199) pendant la phase de cuisson (BP),
b. application (120) d'un liant (220) pendant une phase d'application (ATP) au moins sur la zone partielle (201),
c. mise en place (130) de la pièce (210) pendant une phase de mise en place (ABP) au moins sur la zone partielle (201) de sorte que la pièce (210) soie au moins partiellement logée dans des creux de la face supérieure rugueuse et soie ainsi protégée d'influences environnementales, et
d. durcissement (160) du liant (220) lors d'une phase de durcissement (AHP),
**caractérisé en ce que**
l'application (120) du liant (220) se fait uniquement avant la mise en place (130) de la pièce (210),
la phase d'application (ATP), la phase de mise en place (ABP) et la phase de durcissement (AHP) sont incluses dans la phase de refroidissement (AP), et une température (T) de l'ébauche de biscuit (199) est
e. pendant la phase d'application (ATP) inférieure à une température maximale d'application (TATmax) et supérieure à une température minimale d'application (TATmin) et
f. pendant la phase de mise en place (ABP) inférieure à une température de mise en place maximale (TABmax) et supérieure à une température de mise en place minimale (TABmin), et
le liant (220) est transparent.

2. Procédé (100) selon la revendication 1,
**caractérisé en ce qu'**
un ajustement (110) d'au moins une propriété physico-chimique du liant (220), de préférence d'une viscosité, d'une valeur de pH, d'une valeur Brix ou d'une température du liant (220), se fait, l'ajustement (110) consistant de préférence en ajustant une température du liant (220) et/ou en ajoutant au moins un solvant et/ou un ingrédient au liant (220).

3. Procédé (100) selon l'une des revendications 1 à 2,
**caractérisé en ce que**
l'application (120) du liant se fait à une valeur pH du liant comprise entre 4 et 9 et/ou une valeur Brix du liant supérieure à 50°Brix.

4. Procédé (100) selon l'une des revendications 1 à 3,
**caractérisé en ce que**
l'application (120) du liant se fait
a. par brossage, de préférence avec un outil de brossage profilé ; et/ou
b. par pulvérisation sous un angle compris entre 10° et 80° par rapport à une surface de support de l'ébauche de biscuit (199), depuis plusieurs directions, à travers un masque et/ou avec au moins une buse dirigeable et/ou une buse à ultrasons.

5. Procédé (100) selon l'une des revendications 1 à 4,
**caractérisé par**
un retrait (140) du liant (220) qui ne se trouve pas sur une surface de contact entre la pièce (210) et le dessus de l'ébauche de biscuit (199) après la mise en place (130) par soufflage, aspiration et/ou absorption dans l'ébauche de biscuit (199) du liant (220).

6. Procédé (100) selon l'une des revendications 1 à 5,
**caractérisé par**
un détachement (150) des pièces (210) insuffisamment liées de l'ébauche de biscuit (199) par secouage, soufflage et/ou aspiration des pièces (210) insuffisamment liées, et un renvoi (151) des pièces (210) détachées pour la mise en place (130) sur une autre ébauche de biscuit (199).

7. Procédé (100) selon l'une des revendications 1 à 6,
**caractérisé en ce que**
l'application (120) du liant (220) ajuste une perception sensorielle comprenant un goût et/ou une consistance du biscuit (200).

8. Procédé (100) selon l'une des revendications 1 à 7,
**caractérisé en ce que**
a. l'application (120) et/ou la mise en place (130) laisse de côté une région de bord (202) de l'ébauche de biscuit (199) ; et/ou
b. la mise en place (130) a lieu sur une surface s'étendant au-delà de la zone partielle (201) et/ou

9. Procédé (100) selon l'une des revendications 1 à 8,
**caractérisé en ce que**
le durcissement (160) du liant (220) comprend un refroidissement contrôlé du biscuit (200).
